# FASCICULE DE BREVET EUROPEEN

(11) **EP 2 314 153 B1**
(45) Date de publication et mention de la délivrance du brevet: **29.08.2012**
(21) Numéro de dépôt: 10364006.6
(22) Date de dépôt: 22.10.2010
(51) Int. Cl.: A01G 9/02, A01G 27/02

(54) **Pot de culture pour végétaux avec dispositif d'éclairage incorporé**
Anzuchttopf für Pflanzen mit eingebauter Beleuchtungsvorrichtung
Cultivation pot for plants with built-in lighting device

(30) Priorité: 26.10.2009 FR 0905141
(43) Date de publication de la demande: 27.04.2011
(73) Titulaire: Fiacre, Sophie, 29000 Quimper (FR)
(72) Inventeur: Fiacre, Sophie, 29000 Quimper (FR)

(56) Documents cités:
- WO-A1-2009/089692
- US-A- 5 454 187
- US-A- 5 934 017
- US-A1- 2007 084 114

## Description

La présente invention concerne un pot de culture pour végétaux avec un dispositif d'éclairage spécifique du type ampoule fluo compacte, équivalent à la lumière du jour.

Il est connu de l'art antérieur notamment le document WO 2009/089692A1 qui concerne également un luminaire avec des plantes mais celui-ci propose uniquement un pot avec des LEDS et ne propose pas d'ouverture latérale.

Le pot de culture selon la revendication 1 permet de remédier à ces inconvénients. Ile pot de culture selon l'invention est destinée à contenir un substrat dans lequel peut pousser des végétaux, le pot de culture étant constitué de deux contenants rigides sensiblement concentriques, l'un (1) étant destiné à recevoir une réserve d'eau, l'autre (2) destiné à recevoir le substrat.

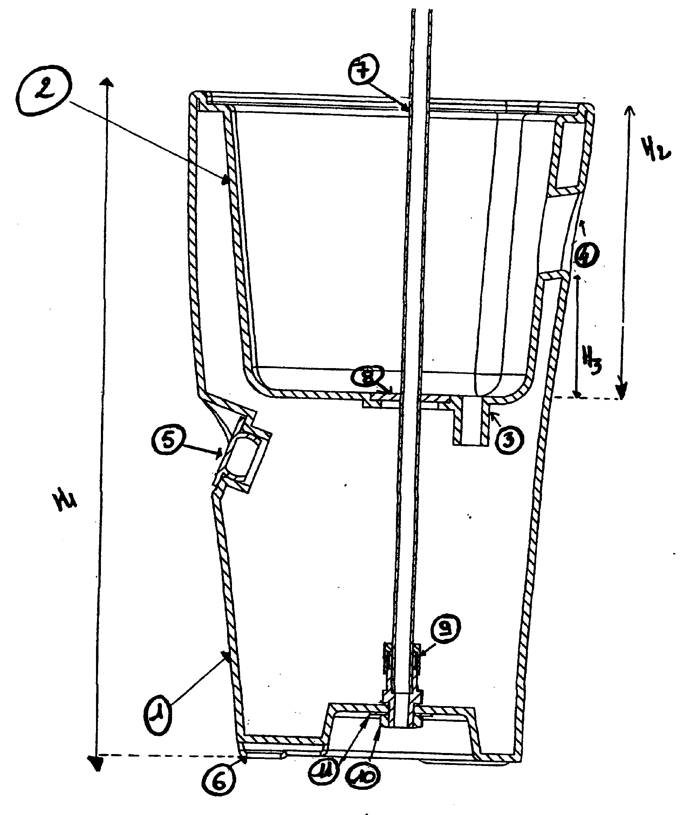

La figure unique représente une coupe du pot de culture selon l'invention.

Le pot de culture pour plantes ou fleurs avec dispositif d'éclairage maintenu en sa partie supérieure est constitué de 2 contenants rigides, sensiblement concentriques, l'un(1) étant destiné à recevoir une réserve d'eau, l'autre(2) destiné à recevoir le substrat racinaire, ce dernier (2) se trouvant dans la partie supérieur du premier (1), solidarisables de manière étanche par leurs bords supérieurs.

Un tube rigide étanche (7) traversant, assure le passage d'une connexion électrique à partir du dessous, rigidifiant ainsi l'ensemble. L'élément traversant étanche (7) forme ainsi un passage pour un câble d'alimentation électrique relié à une extrémité à la douille E27 de la lampe disposée au dessus du pot, l'autre extrémité comportant en partie basse une fiche électrique.

Le contenant (2) présente une découpe centrale (8) pour pouvoir y insérer une rondelle en plastique empêchant le substrat de tomber dans la réserve d'eau et assurant par la même le maintien du tube en cuivre.

Le contenant rigide (2) possède dans son fond un système d'ouverture (3) permettant aux racines de venir plonger directement dans la réserve d'eau contenue dans le contenant (1).

Le pot de culture comporte un feutre géotextile inséré à travers le système d'une fente (3) permettant la remontée par capillarité de l'eau du contenant (1) au contenant (2). L'irrigation de la plante est ainsi assurée par le feutre géotextile.

Le pot de culture selon l'invention comporte au moins une ouverture étanche (4) latérale traversant les parois verticales du contenant (1) et du contenant (2) permettant à des plantes un positionnement latéral. Il est entendu que les plantes peuvent également sortir par le haut du pot de culture. Cette ouverture latérale (4) communique avec le milieu de culture prévu pour permettre le développement des plantes. Plusieurs orifices étanches sont possibles.

Le contenant (1) comporte sensiblement à mi-hauteur un orifice de remplissage d'eau (5), obturable hermétiquement. Cet orifice est fermé par, par exemple, un bouchon de diamètre 30mm permettant ainsi la fermeture de la réserve d'eau.

Les dimensions du pot de culture répondent aux critères suivants :
- Rapport R égal à la hauteur H2 du contenant (2) sur la hauteur global H1 du pot (1) qui est défini comme ci-après 0,4<R<0,5 avec R=H2/H1
- Rapport R' = H3/H2 ; H3 étant la hauteur définie par l'extrémité inférieure de l'ouverture (4) et du fond du contenant (2), qui est défini comme ci-après 0,3<R'<0,6.

Une rainure extérieure (6) sous le pot permet le passage du câble assurant ainsi la stabilité du luminaire.

A son extrémité, le tube est fixé au fond du pot par un raccord en laiton (9) avec un joint fibre permettant d'assurer l'étanchéité. Les moyens de raccord comprennent également de la visserie comme un écrou (10) et une rondelle (11) de diamètre 10mm. Cette rondelle permet de faire appui sur l'écrou de fixation (10).

Les éléments (9), (10) et (11) constituent également des moyens de lestage et de stabilité dans le cas où la réserve d'eau se trouverait vide.

Dans un mode de réalisation, le pot de culture est réalisé en polyéthylène linéaire rotomoulé. De préférence, le pot de culture selon l'invention est optimisé pour une utilisation avec une ampoule fluocompacte mais fonctionne avec tout type d'ampoule à douille. L'ampoule fluocompacte favorise la photo synthèse des végétaux.

## Revendications

1. Pot de culture pour plantes ou fleurs avec dispositif d'éclairage maintenu en sa partie supérieure ledit pot étant constitué de 2 contenants rigides, sensiblement concentriques le premier (1) étant destiné à recevoir une réserve d'eau, le second (2) destiné à recevoir le substrat racinaire, ce dernier (2) se trouvant dans la partie supérieur du premier (1), solidarisables de manière étanche par leurs bords supérieurs, un tube rigide étanche (7) traversant, assurant le passage d'une connexion électrique à partir du dessous, rigidifiant aussi l'ensemble, **caractérisé en ce qu'**il comporte au moins une ouverture (4) étanche latérale traversant les parois verticales du premier contenant (1) et du second contenant (2) permettant à des plantes un positionnement latéral.

2. Pot de culture selon la revendication 1, **caractérisé en ce que** le second contenant (2) présente une découpe centrale (8) pour pouvoir y insérer une rondelle en plastique empêchant le substrat de tomber dans la réserve d'eau et assurant par la même le maintien du tube en cuivre.

3. Pot de culture selon la revendication 1 ou 2 **caractérisé en ce que** le second contenant rigide (2) possède dans son fond un système d'ouverture (3) permettant aux racines de venir plonger directement dans la réserve d'eau contenue dans le premier contenant (1).

4. Pot de culture selon la revendication 3 **caractérisé en ce qu'**il comporte un feutre géotextile inséré à travers le système d'ouverture (3) permettant la remontée par capillarité de l'eau du premier contenant (1) au second contenant (2).

5. Pot de culture selon l'une quelconque des revendications précédentes **caractérisé en ce qu'**il comporte au moins une ouverture (4) étanche latérale traversant les parois verticales du contenant premier (1) et du second contenant (2) permettant à des plantes un positionnement latéral.

6. Pot de culture selon l'une quelconque des revendications précédente **caractérisé en ce que** le premier contenant (1) comporte sensiblement à mi-hauteur un orifice de remplissage d'eau (5), obturable hermétiquement.

7. Pot de culture selon l'une quelconque des revendications précédentes **caractérisé en ce qu'**il respecte le rapport R= H2/H1, H1 étant la hauteur du premier contenant (1) et H2 la hauteur du second contenant (2) défini par 0,4<R<0,5

8. Pot de culture selon la revendication 7 **caractérisé en ce qu'**il respecte le rapport R' = H3/H2 ; H3 étant la hauteur définie par l'extrémité inférieure de l'ouverture (4) et du fond du second contenant (2), défini par 0,3<R'<0,6

9. Pot de culture selon l'une quelconque des revendications précédentes **caractérisé en ce que** le fond du premier contenant (1) comprend des moyens de lestage.

## Claims

1. Cultivation pot for plants or flowers, having a lighting device held in its upper part, said pot consisting of two rigid, approximately concentric containers, the first (1) being intended to hold a reserve of water, the second (2) being intended to hold the root substrate, said second container (2) being located in the upper part of the first container (1), it being possible to secure said containers together in a sealed manner by way of their upper rims, a leaktight rigid tube (7) passing through, ensuring the passage of an electrical connection from below, and also stiffening the assembly, **characterized in that** said pot has at least one leaktight lateral opening (4) that passes through the vertical walls of the first container (1) and of the second container (2), allowing plants to be positioned laterally.

2. Cultivation pot according to Claim 1, **characterized in that** the second container (2) has a central cutout (8) into which a disc that prevents the substrate from drcpping into the reserve of water and at the same time holds the tube can be inserted.

3. Cultivation pot according to Claim 1 or 2, **characterized in that** the second rigid container (2) has in its bottom an opening system (3) that allows the roots to dip directly into the reserve of water contained in the first container (1).

4. Cultivation pot according to Claim 3, **characterized in that** it has a geotextile felt which is inserted through the opening system (3) and allows the water in the first container (1) to rise into the second container (2) by capillary action.

5. Cultivation pot according to any one of the preceding claims, **characterized in that** it has at least one leaktight lateral opening (4) that passes through the vertical walls of the first container (1) and of the second container (2), allowing plants to be positioned laterally.

6. Cultivation pot according to any one of the preceding claims, **characterized in that** the first container (1) has, approximately halfway up, a water filling orifice (5) which is hermetically closable.

7. Cultivation pot according to any one of the preceding claims, **characterized in that** it satisfies the relationship R=H2/H1, H1 being the height of the first container (1) and H2 being the height of the second container (2), defined by 0.4<R<0.5.

8. Cultivation pot according to Claim 7, **characterized in that** it satisfies the relationship R'=H3/H2, H3 being the height defined by the lower end of the opening (4) and the botton of the second container (2), defined by 0.3<R'<0.6.

9. Cultivation pot according to any one of the preceding claims, **characterized in that** the bottom of the first container (1) comprises ballasting means.

## Patentansprüche

1. Anzuchttopf für Pflanzen oder Blumen mit in seinem oberen Bereich gehaltener Beleuchtungsvorrichtung, wobei der Topf aus zwei steifen, im Wesentlichen konzentrischen Behältern besteht, wobei der erste (1) dazu bestimmt ist, einen Wasservorrat aufzunehmen, während der zweite (2) dazu bestimmt ist, das Wurzelsubstrat aufzunehmen, wobei Letzterer (2) sich im oberen Teil des Ersteren (1) befindet, die über ihre oberen Ränder dicht miteinander verbindbar sind, wobei ein steifes Durchgangsrohr (7) ausgehend von unten den Durchgang einer elektrischen Verbindung gewährleistet und auch die Einheit versteift, **dadurch gekennzeichnet, dass** er mindestens eine dichte seitliche Öffnung (4) aufweist, die die senkrechten Wände des ersten Behälters (1) und des zweiten Behälters (2) durchquert, was eine seitliche Positionierung von Pflanzen erlaubt.

2. Anzuchttopf nach Anspruch 1, **dadurch gekennzeichnet, dass** der zweite Behälter (2) einen zentralen Ausschnitt (8) aufweist, um dort eine Scheibe einführen zu können, die das Fallen des Substrats in den Vasserworrat verhindert und gleichzeitig den Halt des Rohrs gewährleistet.

3. Anzuchttopf nach Anspruch 1 oder 2, **dadurch gekennzeichnet, dass** der zweite steife Behälter (2) in seinem Boden ein Offnungssystem (3) besitzt, das es Wurzeln erlaubt, direkt in den im ersten Behälter (1) enthaltenen Wasservorrat einzutauchen.

4. Anzuchttopf nach Anspruch 3, **dadurch gekennzeichnet, dass** er einen geotextilen filz aufweist, der durch das Öffnungssystem (3) eingeführt wird und das Hochsteigen des Wassers vom ersten Behälter (1) zum zweiten Behälter (2) durch Kapillarwirkung erlaubt.

5. Anzuchttopf nach einem der vorhergehenden Ansprüche, **dadurch gekennzeichnet, dass** er mindestens eine dichte seitliche Öffnung (4) aufweist, die die senkrechten Wände des ersten Behälters (1) und des zweiten Behälters (2) durchquert, was eine seitliche Positionierung von Pflanzen erlaubt.

6. Anzuchttopf nach einem der vorhergehenden Ansprüche, **dadurch gekennzeichnet, dass** der erste Behälter (1) im Wesentlichen auf halber Höhe eine hermetisch verschließbare Wassereinfüllöffnung (5) aufweist.

7. Anzuchttopf nach einem der vorhergehenden Ansprüche, **dadurch gekennzeichnet, dass** er das Verhältnis R=H2/H1, wobei H1 die Höhe des ersten Behälters (1) und H2 die Höhe des zweiten Behälters (2) ist, einhält, das durch 0,4<R<0,5 definiert ist.

8. Anzuchttopf nach Anspruch 7, **dadurch gekennzeichnet, dass** er das Verhältnis R'= H3/H2, wobei H3 die Höhe ist, die vom unteren Ende der Öffnung (4) und vom Boden des zweiten Behälters (2) definiert wird, einhält, das durch 0,3<R'<0,6 definiert ist.

9. Anzuchttopf nach einem der vorhergehenden Ansprüche, **dadurch gekennzeichnet, dass** der Boden des ersten Behälters (1) Ballasteinrichtungen enthält.
